# EUROPÄISCHE PATENTANMELDUNG

(11) **EP 3 575 131 A1**
(43) Veröffentlichungstag der Anmeldung: **04.12.2019**
(21) Anmeldenummer: 18174717.1
(22) Anmeldetag: 29.05.2018
(51) Int. Cl.: B60L 9/00, H02M 1/12

(54) **ANTRIEBSSYSTEM FÜR EIN ELETRISCH BETRIEBENES SCHIENENFAHRZEUG**

(71) Anmelder: Siemens Mobility GmbH, 81739 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)

(57) **Zusammenfassung**

Die Erfindung betrifft ein Antriebssystem (1) für ein Schienenfahrzeug (2) aufweisend einen Haupttransformator (3), einen Traktionsstromrichter (4) mit einem Zwischenkreis (41) und ein aktives Filter (5), wobei der Traktionsstromrichter (4) mit einer ersten Sekundärwicklung (321) des Haupttransformators (3) verbunden ist, wobei das aktive Filter (5) einen Wechselrichter (51) mit Halbleitern (52) auf Basis von Siliziumcarbid aufweist. Ferner betrifft die Erfindung ein Schienenfahrzeug (2) mit einem derartigen Antriebssystem. Weiter betrifft die Erfindung ein Verfahren zum Betreiben eines derartigen Antriebssystems (1) oder eines derartigen Schienenfahrzeugs (2), wobei der Wechselrichter (51) des aktiven Filters (5) derart angesteuert wird, einen Störstrom (i_{S}) durch die Primärwicklung (31) des Haupttransformators (3) zu kompensieren.

## Beschreibung

Die Erfindung betrifft ein Antriebssystem für ein Schienenfahrzeug mit einem Haupttransformator und einem Traktionsstromrichter, der wiederum einen Zwischenkreis aufweist, wobei der Traktionsstromrichter mit einer ersten Sekundärwicklung des Haupttransformators verbunden ist. Ferner betrifft die Erfindung ein Schienenfahrzeug mit einem derartigen Antriebssystem. Weiter betrifft die Erfindung ein Verfahren zum Betreiben eines derartigen Antriebssystems oder eines derartigen Schienenfahrzeugs.

Der Netztransformator, auch als Haupttransformator bezeichnet, eines Antriebssystems für ein Schienenfahrzeug, das für den Betrieb mit Wechselspannung vorgesehen ist, besitzt typischerweise einen relativ schlechten Wirkungsgrad. Insbesondere bei Wechselspannungsnetzen mit einer Frequenz von 16 2/3Hz besitzt der Haupttransformator eine besonders große Baugröße und Masse. Aufgrund der Bauraumbeschränkungen auf dem Schienenfahrzeug kann der Haupttransformator typischerweise nicht wirkungsgradoptimiert gestaltet werden.

Zur Begrenzung der Netzrückwirkungen des Traktionsstromrichters wird der Haupttransformator mit einer ausreichenden Kurzschlussspannung uₖ, d.h. mit einer hinreichend großen Streuinduktivität, ausgeführt. Mittels der Windungszahl lässt sich die Kurzschlussspannung und damit die Streuinduktivität einstellen. Je kleiner die Anzahl der Windungen, desto kleiner ist die Streuinduktivität des Haupttransformators. Daneben besitzt die Kurzschlussspannung auch einen Schutzaspekt, da sie im Kurzschlussfall den Kurzschlussstrom aus dem Netz begrenzt.

Für die breitbandige Anregung eines Traktionsstromrichters muss eine ausreichende Streuinduktivität die Netzströme, d.h. die Ströme durch die Primärwicklung des Haupttransformators, ausreichend bedämpfen um einen Konflikt mit den gültigen Störstromgrenzwerten zu vermeiden. Die Grenzwerte der Netzstörströme liegen in der Regel im Frequenzbereich zwischen 2kHz und 18kHz.

Einer kleinen Kurzschlussspannung kann mit einer Erhöhung der Schaltfrequenz des Traktionsstromrichters entgegengewirkt werden, damit sich die Harmonischen der Stromrichterspannung zu größeren Frequenzen verschieben um dadurch bei kleinerer Kurzschlussspannung keine größeren Netzstromharmonische hervorzurufen. Derzeit werden Traktionsstromrichter hinsichtlich ihrer Schaltfrequenz derart ausgelegt, dass die Durchlassverluste der Halbleiter in etwa den Schaltverlusten entsprechen.

Um auch bei streuärmeren und verlustärmeren Transformatoren die Anforderungen bezüglich Störströmen einhalten zu können, wird in diesem Fall oftmals ein passives Filter vorgesehen. Dieses wirkt als Saugkreis auf eine Frequenz und lässt sich mit einer geeigneten Dämpfung möglichst breitbandig abstimmen.

Der Erfindung liegt die Aufgabe zugrunde, das Antriebssystem eines Schienenfahrzeugs zu verbessern.

Diese Aufgabe wird durch ein Antriebssystem für ein Schienenfahrzeug aufweisend einen Haupttransformator, einen Traktionsstromrichter mit einem Zwischenkreis und ein aktives Filter gelöst, wobei der Traktionsstromrichter mit einer ersten Sekundärwicklung des Haupttransformators verbunden ist, wobei das aktive Filter einen Wechselrichter mit Halbleitern auf Basis von Siliziumcarbid aufweist. Ferner wird die Aufgabe durch ein Schienenfahrzeug mit mindestens einem derartigen Antriebssystem gelöst. Weiter wird die Aufgabe durch ein Verfahren zum Betreiben eines derartigen Antriebssystems oder eines derartigen Schienenfahrzeugs gelöst, wobei der Wechselrichter des aktiven Filters derart angesteuert wird, einen Störstrom durch die Primärwicklung des Haupttransformators zu kompensieren.

Weitere vorteilhafte Ausgestaltungen der Erfindung sind in den abhängigen Ansprüchen angegeben.

Der Erfindung liegt die Erkenntnis zugrunde, dass sich das Antriebssystem dadurch deutlich verbessern lässt, dass in das Antriebssystem ein aktives Netzfilter mit Halbleitern auf Basis von Siliziumcarbid (SiC) hinzugefügt wird. Diese Halbleiter zeichnen sich durch die Möglichkeit aus, mit hoher Schaltfrequenz (f_{S}) betrieben werden zu können. Durch das aktive Filter ist es möglich, die durch den Betrieb des Traktionsstromrichters entstehenden Störströme zu kompensieren, d.h. zu beseitigen. Die vom Traktionsstromrichter erzeugten Störströme werden dabei vom aktiven Filter aufgenommen. Damit ist es möglich, die Streuinduktivität des Haupttransformators und damit die Kurzschlussspannung zu reduzieren.

Durch die Verwendung eines aktiven Filters mit SiC Halbleitern zur zusätzlichen Einspeisung eines Kompensationsstroms oder einer Kompensationsspannung in den Leistungskreis lassen sich Störströme bzw. Störspannungen im kritischen Frequenzbereich unterhalb von 18kHz kompensieren. Durch die Verwendung von SiC-Bauelementen, lässt sich durch eine verfügbare hinreichend hohe Schaltfrequenz eine ausreichende Bandbreite der Kompensation erzielen.

Insbesondere niedrigsperrende SiC Halbleiter mit einer Sperrspannung von kleiner oder gleich 1700V, wie sie sich für Zweilevel-Traktionsstromrichter (2L-Stromrichter) aufgrund der hohen Netzspannungen typischerweise nicht eignen, versprechen eine hohe Leistungsfähigkeit bei der Anwendung in einem aktiven Filter weil die Durchlassverluste mit zunehmender Zwischenkreisspannung ansteigen. Das gilt auch für die Schaltverluste.

Zur Kompensation der Netzstörstromharmonischen ist für den Wechselrichter des aktiven Filters zudem eine deutlich höhere Schaltfrequenz fₛ>>18kHz vorteilhaft, wenn mehrere Störstromharmonische kompensiert werden sollen.

Sollen hingegen nur Frequenzen bis 6kHz kompensiert werden, ist es vorteilhaft, das aktive Filter mit einer Schaltfrequenz von fs>6kHz zu betreiben. Die durch das aktive Filter entstehenden Störströme treten dann bei 3-facher Schaltfrequenz, also oberhalb von 18kHz. Diese liegen dann außerhalb des kritischen Bereichs. Die Streuinduktivität des Transformators ist dann so bemessen, dass Störströme oberhalb von 6kHz hinreichend durch die Streuinduktivität reduziert werden. Dies stellt einen guten Kompromiss zwischen aktiver Kompensation und Reduzierung von Störströmen durch Streuinduktivität dar. Mit anderen Worten hat es sich als besonders vorteilhaft, den Traktionsstromrichter mit einem aktiven Filter in 2L-Brückenschaltung mit Grundfrequenztaktung mit einer Schaltfrequenz von fs>6kHz zu kompensieren, während zusätzliche ungerade Frequenzvielfache der Kompensationsfrequenz entstehen, mit denen aber keine Konflikte mit Störstromgrenzwerten entstehen. Da die Verluste des aktiven Filters mit steigender Schaltfrequenz ansteigen, ist diese Lösung besonders energieeffizient.

Durch die Verwendung des aktiven Filters wird der Traktionsstromrichter mit einer Schaltfrequenz unterhalb von 18kHz, größtenteils sogar deutlich unterhalb von 18kHz, betrieben. Bei Si Halbleitern liegt die Schaltfrequenz typischerweise im Bereich von 200 Hz bis 2 kHz. Der Traktionsstromrichter überträgt die für den Antrieb erforderliche Leistung. Daher ist es vorteilhaft im Hinblick auf Verluste, die Schaltfrequenz nicht zu hoch zu wählen, da dadurch Schaltverluste im Traktionsstromrichter vermieden werden. Die entstehenden Störströme, insbesondere bei den ungradzahligen Vielfachen der Schaltfrequenz, werden dann durch das aktive Filter beseitigt. Diese Beseitigung kann vorteilhafterweise frequenzselektiv, d.h. für einzelne, insbesondere störende Frequenzen, vorgenommen werden. Durch die frequenzselektive Kompensation kann das aktive Filter besonders klein und kostengünstig realisiert werden, da es nur für die zu kompensierenden Anteile ausgelegt werden muss.

Gegenüber einer passiven Filterschaltung hat das aktive Filter den Vorteil, dass das aktive Filter nur auf Störströme reagiert, während ein passives Filter auch auf im Netz vorhandene Störungen reagiert. Dadurch kann das aktive Filter alleine auf die Gegebenheiten des Antriebssystems ausgelegt werden, während ein passives Netzfilter auch Annahmen zu den im Netz zu erwarteten Störungen berücksichtigen muss. Das macht die Auslegung des aktiven Filters nicht nur einfacher und kostengünstiger, sondern sinkt auch das Risiko einer Überlastung im Betrieb.

Durch das aktive Netzfilter kann eine hohe Regelbandbreite zur Kompensation von Störströmen, die vom Traktionsstromrichter erzeugt werden, erreicht werden. Gleichzeitig sinken die Anforderungen an die Störströme des Traktionsstromrichters, da diese mit Hilfe des aktiven Filters kompensiert werden. Die Kompensation der Störströme durch das aktive Filter gestattet damit eine kleine Kurzschlussspannung des Haupttransformators. Dadurch ergibt sich für diesen und damit für das gesamte Antriebssystem ein hoher Wirkungsgrad. Dies führt zu Energieeinsparungen und geringerer Kühlleistung. Darüber hinaus führt die Kompensation von Störströmen auch zu einer Geräuschreduktion, da der magnetische Fluss im Haupttransformator, hervorgerufen von den Störströmen, oftmals Geräusche erzeugen.

Bei einer vorteilhaften Ausgestaltung der Erfindung weist der Traktionsstromrichter weitere Halbleiter auf Basis von Siliziumcarbid auf. Diese weiteren Halbleiter ermöglichen höhere Schaltfrequenzen auch für den Traktionsstromrichter. Ein möglicher und vernünftiger Kompromiss für eine erreichbare Schaltfrequenz der weiteren Halbleiter des Traktionsstromrichters ist beispielsweise dann gegeben wenn im Nennbetrieb die Durchlassverluste in etwa den Schaltverlusten entsprechen. Dabei wird von einer Abweichung im Nennarbeitspunkt von 10% ausgegangen.

Die Verwendung von weiteren Halbleitern auf Basis von Siliziumcarbid mit vergleichsweise hoher Schaltfrequenz im Vergleich zu Halbleitern auf Basis von Silizium (Si-Halbleiter) im Traktionsstromrichter führt dazu, dass Störströme bei höheren Frequenzen auftreten. Da der kritische Frequenzbereich von 2-18kHz unabhängig vom eingesetzten Halbleitertyp ist, ist die eingespeiste Störleistung im betreffenden Frequenzbereich mit Traktionsstromrichtern auf Basis von SiC Halbleitern geringer als mit Si-Bauelementen.

Der Einsatz von SiC Stromrichtern bietet auch hier mit vergleichsweise hohen Schaltfrequenzen (typischerweise >=5x so hoch wie bei Si) die Möglichkeit den Haupttransformator wirkungsgradverbesserter zu bauen. Nichtsdestotrotz liegen die ersten, typischerweise amplitudenstärksten Bandwiederholungen (n x fₛ +- (2k+1) x f1) bei den gradzahligen Vielfachen der Schaltfrequenz mitten im kritischen Bereich der Netzstörstromgrenzwerte, sodass Konflikte mit Netzstörstromgrenzwerten nach wie vor, insbesondere angesichts einer kleineren Transformatorkurzschlussspannung nach wie vor ein Problem darstellen. Zwar kann hier ein passiver Netzfilter u.U. schmalbandiger ausgeführt werden, weil nur wenige Harmonische angeregt werden, weil vorwiegend nur die erste und zweite Bandwiederholung zu Netzstörstromkonflikten führen, allerdings ist auch die Anregung vom Netz noch ausgeprägter weil das Netzfilter durch eine kleinere uk niederimpedanter an das Netz angebunden ist.

Bei Taktung mit einer Schaltfrequenz fs>10kHz würden zwar Störstromfrequenzen <18kHz mit einem 2Punkt-Traktionsstromrichter kaum mehr angeregt. Allerdings ist es nachteilig, dass selbst bei SiC Bauelementen die Leistungsfähigkeit schaltverlustbegrenzt wäre und hier sehr viel Halbleitermaterial verwendet werden müsste und sich damit ein unwirtschaftlicher Stromrichter ergäbe. Mit SiC Mehrpunktstromrichtern ergäbe sich hier eine Verschiebung in Richtung noch höherer Frequenzen, allerdings zum Preis einer erhöhten Komplexität und auch hoher Kosten und Ausfallwahrscheinlichkeit (Fitrate). Mit einem 3L-Stromrichter gelingt mit einer Halbleiterschaltfrequenz von fₛ=5kHz die Vermeidung einer wesentlichen Anregung <18kHz allerdings führen auch bei SiC 5kHz Schaltfrequenz zu hohen Schaltverlusten. SiC bietet zwar die Möglichkeit die Schaltfrequenz gegenüber Si deutlich zu erhöhen, allerdings trotzdem nicht beliebig und ggf. zu deutlich höheren Kosten.

Somit bietet die Verwendung von Traktionsstromrichtern mit weiteren Halbleitern auf Basis von Siliziumcarbid alleine nur beschränkt das Potential, die Streuinduktivität des Haupttransformators zu beeinflussen. Erst durch die Kombination von Traktionsstromrichter mit weiteren Halbleitern auf der Basis von SiC und dem aktiven Filter, lässt sich die Schaltfrequenz des Traktionsstromrichters in einem sinnvollen Maß gegenüber den Einsatz von Si Halbleitern erhöhen, wobei die Verluste nicht unverhältnismäßig ansteigen, und gleichzeitig der Aufwand für die Kompensation durch das aktive Filter reduzieren. Einher geht damit die Möglichkeit, einer Reduktion der Streuinduktivität des Haupttransformators. Als besonders vorteilhaft haben sich dabei Schaltfrequenzen für den Traktionsstromrichter im Bereich von 2kHz bis 10kHz erwiesen. In diesem Bereich sind die Schaltverluste noch moderat und das aktive Filter kann deutlich einfacher und kostengünstiger ausgeführt werden, da dann nur noch geringe Störströme auf besonders einfache Weise zu reduzieren sind. Gleichzeitig kann die Streuinduktivität des Haupttransformators derart reduziert werden, dass der Haupttransformator kleiner, leichter und kostengünstiger wird.

In diesem Fall wird dann der Traktionsstromrichter mit einer niedrigeren Schaltfrequenz betrieben als das aktive Filter.

Durch den besseren Wirkungsgrad lässt sich der Wirkungsgrad des gesamten Antriebssystems signifikant verbessern. Dadurch kann aufgenommene Energie, aber auch Kühlleistung eingespart werden. Dies reduziert den Energieverbrauch des Schienenfahrzeugs.

Bei einer weiteren vorteilhaften Ausgestaltung der Erfindung weist der Haupttransformator eine Kurzschlussspannung von uk<25%, insbesondere uk<15%, auf. Ein Haupttransformator mit dieser Streuinduktivität kann besonders kostengünstig gebaut werden, hat ein deutlich geringeres Gewicht und weist auch deutlich geringere Verluste auf als vergleichbare Transformatoren mit höherer Kurzschlussspannung. Ermöglicht wird die Reduktion der Kurzschlussspannung durch die Verwendung des aktiven Filters, das die Störströme reduziert.

Bei einer weiteren vorteilhaften Ausgestaltung der Erfindung sind die Halbleiter derart ausgelegt sind, dass im Betrieb die Schaltverluste größer sind als die Durchlassverluste. Da nicht die gesamte Traktionsenergie durch das aktive Filter fließt, können die Halbleiter des aktiven Filters mit einer höheren Schaltfrequenz betrieben werden ohne den Wirkungsgrad des Gesamtsystems merklich negativ zu beeinflussen. Je geringer der zu kompensierende Strom ist, beispielsweise dadurch schon gering, da der Traktionsstromrichter weitere Halbleiter auf der Basis von SiC aufweist, desto höher kann die Schaltfrequenz gewählt werden, da nur geringe Durchlassverluste anfallen. Somit kann das aktive Filter auf einfache Weise an die Kompensationsaufgabe angepasst werden.

Bei einer weiteren vorteilhaften Ausgestaltung der Erfindung ist das aktive Filter gleichspannungsseitig parallel zum Zwischenkreis des Traktionsstromrichters angeordnet ist. Dadurch lässt sich das aktive Filter auf einfache Weise mit elektrischer Energie versorgen. Durch die parallele Anordnung muss das aktive Filter nicht den gesamten Traktionsstrom aufnehmen sondern nur den zu kompensierenden Strom. Das aktive Filter kann daher entsprechend klein ausgelegt und mit einer hohen Schaltfrequenz betrieben werden.

Bei einer weiteren vorteilhaften Ausgestaltung der Erfindung das aktive Filter wechselspannungsseitig mit einer zweiten Sekundärwicklung des Haupttransformators verbunden ist. Dadurch lässt sich die Höhe der Wechselspannung am wechselspannungsseitigen Anschluss des Stromrichters auf einfache Weise anpassen. Damit können auch niedrig sperrende Halbleiter, beispielsweise mit einer Sperrspannung im Bereich <=1700V eingesetzt werden, die üblicherweise bei einem Traktionsstromrichter aufgrund der zu übertragenden Leistung nicht zum Einsatz kommen. Diese weisen ein deutlich besseres Schaltverhalten (geringere Schaltverluste) auf, so dass das aktive Filter besonders klein und kostengünstig ausgeführt werden kann.

Bei einer weiteren vorteilhaften Ausgestaltung der Erfindung ist das aktive Filter wechselspannungsseitig parallel zur ersten Sekundärwicklung des Haupttransformators angeordnet ist. In diesem Fall kann auf eine zweite Sekundärwicklung des Haupttransformators verzichtet werden. Dadurch kann der Haupttransformator einfacher konstruiert werden.

Bei einer weiteren vorteilhaften Ausgestaltung der Erfindung ist zwischen aktivem Filter und der ersten Sekundärwicklung des Haupttransformators ein Transformator angeordnet. Hierdurch ergeben sich die beiden vorgenannten Vorteile in einer Ausführungsform. Dies sind die Verwendung von niedrigsperrenden Halbleitern und gleichzeitig die einfache und damit kostengünstige Konstruktion des Haupttransformators. Die Anspannung der Spannungsniveaus wird in diesem Fall über den Transformator hergestellt.

Bei einer weiteren vorteilhaften Ausgestaltung der Erfindung ist zwischen dem aktiven Filter und der ersten Sekundärwicklung des Haupttransformators eine Drossel angeordnet. Ohne zusätzliche Trafowicklung lässt sich das aktive Filter auch über eine Drossel parallel zur sekundärseitigen Netzspannung anschließen. Dabei sind die Zwischenkreise des aktiven Filters und des Traktionsstromrichters nicht notwendigerweise parallelgeschaltet. Wenn, dann ist keine zusätzliche Gleichspannungsregelung im aktiven Filter notwendig, wenn nicht, könnte die Zwischenkreisspannung sich von der im Traktionsstromrichter unterscheiden, tatsächlich muss aber immer die gleiche Grundschwingungsnetzspannung abgebildet werden, sodass eine Verbindung der Zwischenkreise (niederinduktiv) zur Einsparung von Kapazität vorteilhaft ist.

Bei einer weiteren vorteilhaften Ausgestaltung der Erfindung ist das aktive Filter in Reihe zwischen der ersten Sekundärwicklung des Haupttransformators und dem Traktionsstromrichter angeordnet. Das aktive Filter kompensiert die Störspannungsharmonischen des Traktionsstromrichters und verhindert damit die Entstehung ungewünschter Störströme. Die Reihenschaltung, gegebenenfalls auch als Reihenschaltung von Teilfiltern, gestattet die Vervielfachung der effektiven Schaltfrequenz des gesamten aktiven Filters. Es lässt sich auch vorstellen, dass eine oder mehrere Module des aktiven Filters gar nicht Teil des aktiven Filters sind sondern dazu dienen, die effektive Schaltfrequenz des Traktionsstromrichters zu erhöhen um die Anregung der Netzharmonischen in Richtung höherer Frequenzen zu verschieben. So könnte z.B. auch ein langsam schaltender Si Stromrichter (mit großer Zwischenkreisspannung) mit schnellschaltenden Si oder SiC Satelliten (mit jeweils kleiner Zwischenkreisspannung) als Traktionsstromrichter nur noch eine geringe Anregung im Störbandbereich besitzen, während das aktive Filter als ähnlicher Satellit die verbleibenden Störspannungsharmonischen kompensiert.

Da das aktive Filter vom vollen Netzstrom durchströmt wird sind derartige aktive Filter insbesondere dann interessant, wenn nur kleine Störspannungen kompensiert werden müssen.

Im Folgenden wird die Erfindung anhand der in den Figuren dargestellten Ausführungsbeispiele näher beschrieben und erläutert. Es zeigen:
- FIG 1: ein bekanntes Antriebssystem eines Schienenfahrzeugs,
- FIG 2: ein bekanntes Antriebssystem mit einem passiven Filter,
- FIG 3 bis FIG 7: Ausführungsbeispiele eines Antriebssystems mit aktivem Filter,
- FIG 8: ein Schienenfahrzeug,
- FIG 9: den Aufbau des aktiven Filters und
- FIG 10: den Aufbau des Traktionsstromrichters.

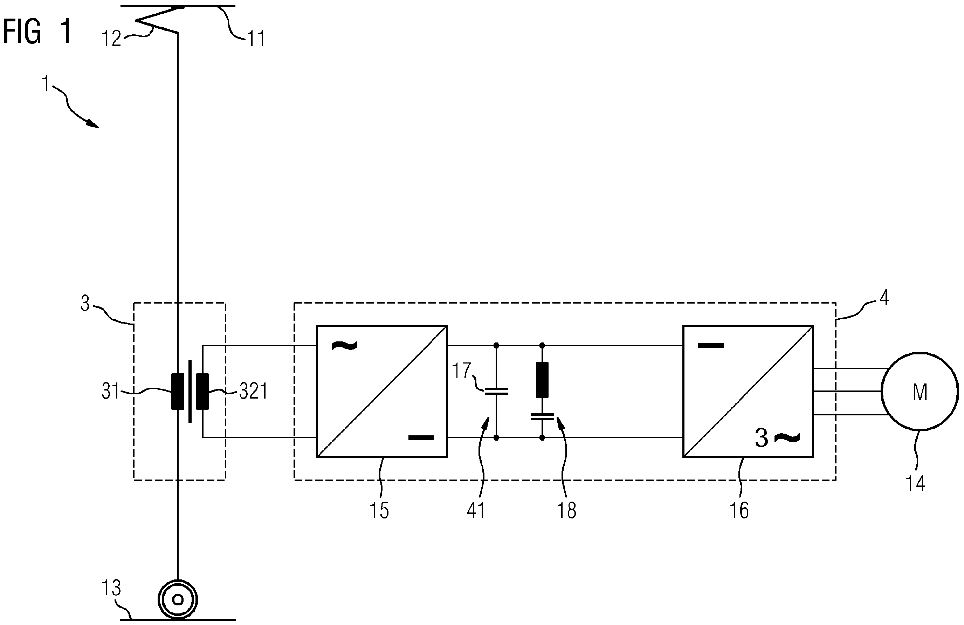

Die FIG 1 zeigt ein Antriebssystem 1, wie es aus dem Stand der Technik bekannt ist. Dabei handelt es sich um ein Antriebssystem für ein Schienenfahrzeug 2. Die zum Antreiben der Motoren 14 benötigte Energie wird der Fahrleitung 11 über einen Stromabnehmer 12 entnommen und einem Haupttransformator 3 zugeführt. Die Primärwicklung 31 des Haupttransformators 3 ist dabei zum einen mit dem Stromabnehmer 12 und zum anderen über das Rad mit der Schiene 13 verbunden. Der Haupttransformator 3 weist darüber hinaus eine erste Sekundärwicklung 321 auf. Zwischen dieser erste Sekundärwicklung 321 und dem Motor 14 ist der Traktionsstromrichter 4 angeordnet. Mit diesem kann der Motor 14 gesteuert bzw. geregelt werden. Die Hauptkomponenten des Traktionsstromrichters 4 sind der Vierquadrantensteller 15 der Zwischenkreis 41 und der Pulswechselrichter 16. Im Zwischenkreis selbst ist ein Zwischenkreiskondensator 17 angeordnet. Darüber hinaus kann, wie hier dargestellt, insbesondere bei 16 2/3Hz Netzen ein Saugkreis 18 in den Zwischenkreis 41 eingefügt werden.

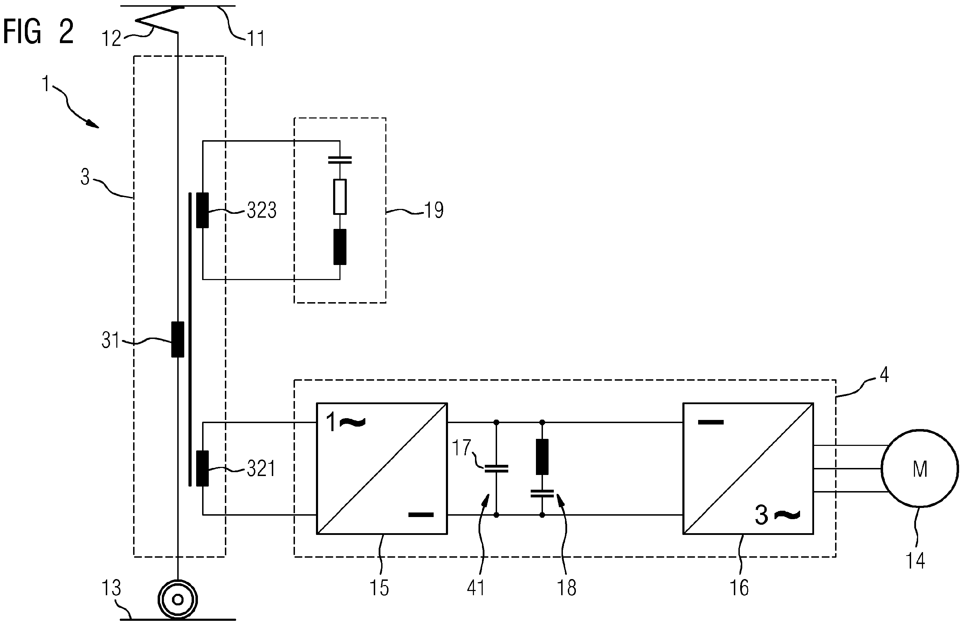

Die FIG 2 zeigt ein weiteres Antriebssystem 1, das sich von den zuvor beschriebenen dadurch unterscheidet, dass hier zusätzlich ein passives Netzfilter 19 vorhanden ist. Zur Vermeidung von Wiederholungen wird auf die Beschreibung zur FIG 1 sowie auf die dort eingeführten Bezugszeichen verwiesen. Das passive Netzfilter ist in diesem Fall über eine weitere Sekundärwicklung 323 des Haupttransformators 3 in das Antriebssystem 1 eingeführt. Mit diesem lassen sich Störströme, die im Traktionsstromrichter 4 entstehen, beseitigen. Allerdings wirkt das passive Netzfilter 19 auch auf Störströme die bereits im Netz vorhanden sind. Das liegt daran, dass es über den Haupttransformator 3 mit der Fahrleitung 11 fest verbunden ist.

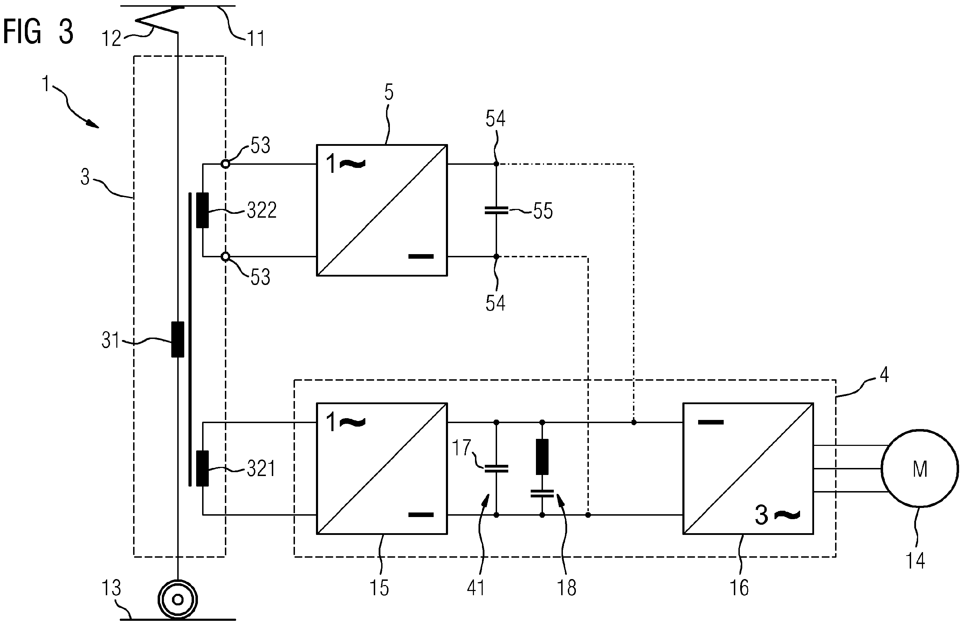

Die FIG 3 zeigt ein Antriebssystem 1 mit einem aktiven Filter 5. Ähnlich wie das passive Netzfilter 19 in der FIG 2 ist das aktive Filter 5 über eine zweite Sekundärwicklung 322 des Haupttransformators 3 in das Antriebssystem 1 integriert. Zur Vermeidung von Wiederholungen wird auf die Beschreibung zu den Figuren 1 und 2 sowie auf die dort eingeführten Bezugszeichen verwiesen. Das aktive Filter 5 ist dabei mit seinen wechselspannungsseitigen Anschlüssen 53 mit der zweiten Sekundärwicklung 322 verbunden. An den gleichspannungsseitigen Anschlüssen 54 des aktiven Filters 5 ist ein Kondensator 55 vorhanden. Dabei können, allerdings nicht notwendigerweise, die gleichspannungsseitigen Anschlüsse 54 des aktiven Filters 5 mit dem Zwischenkreis 41 des Traktionsstromrichters 4 verbunden sein. Mit Hilfe des aktiven Filters 5 ist es möglich, Störströme, die durch den Traktionsstromrichter 4 entstehen, zu kompensieren. Das bedeutet, dass diese Ströme auf der Primärwicklung 31 des Haupttransformators 3 nicht erscheinen. Dazu kann in vorteilhafter Weise der Strom durch die Primärwicklung 31 gemessen werden und auf Komponenten des Störstroms untersucht werden. Sobald ein Störstrom erkannt wird, wird dieser mit Hilfe des aktiven Filters 5 kompensiert. Aufgrund der unterschiedlichen Sekundärwicklungen 321, 322 können das aktive Filter 5 und der Traktionsstromrichter 4 mit Halbleitern unterschiedlicher Sperrspannung ausgestattet sein. Dies ist insbesondere dann auf einfache Weise möglich, wenn die gleichspannungsseitigen Anschlüsse 54 nicht mit dem Zwischenkreis 41 des Traktionsstromrichters 4 verbunden sind.

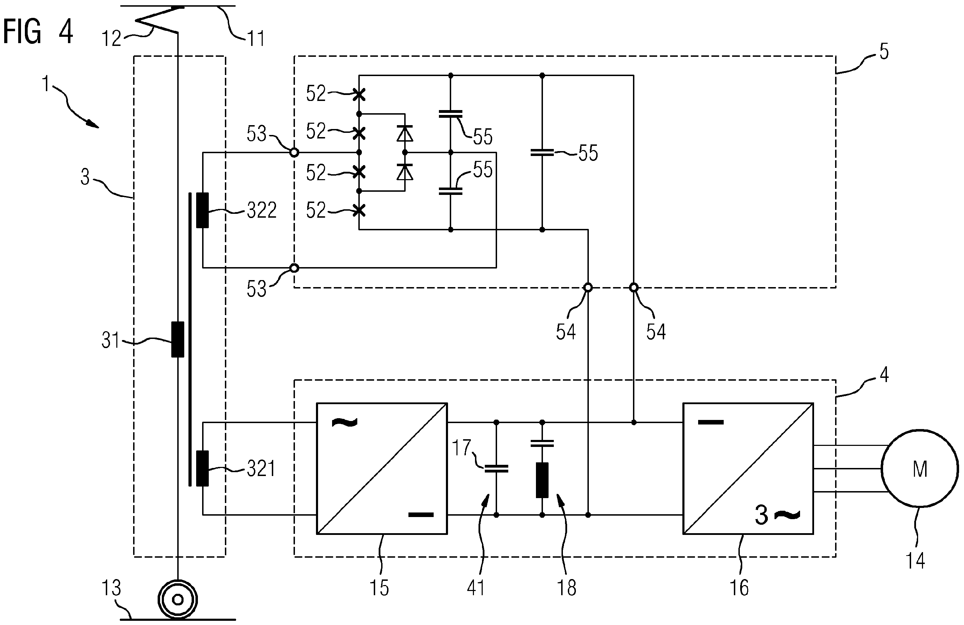

Die FIG 4 zeigt ein weiteres Ausführungsbeispiel eines Antriebssystems 1 mit einem aktiven Filter 5. Zur Vermeidung von Wiederholungen wird auf die Beschreibung zu den Figuren 1 bis 3 sowie auf die dort eingeführten Bezugszeichen verwiesen. Das aktive Filter 5 ist in diesem Beispiel als ein Dreilevel-Stromrichter ausgeführt. Es weist dabei vier Halbleiter 52 auf. Mit dieser Anordnung kann auch bei relativ geringer Schaltfrequenz der Halbleiter 52 ein Verhalten erzeugt werden, bei dem Frequenzanteile bei einer relativ hohen Frequenz, vorzugsweise bei Frequenzen oberhalb 18 kHz, erzeugt werden und somit für den Betrieb des Fahrzeugs kein Problem darstellen. Trotz der Ausführung als Dreilevel-Stromrichter werden lediglich vier Halbleiter 52 benötigt. Da diese alle in Reihe geschaltet sind, können Halbleiter 52 verwendet werden, die eine relativ geringe Sperrfähigkeit aufweisen.

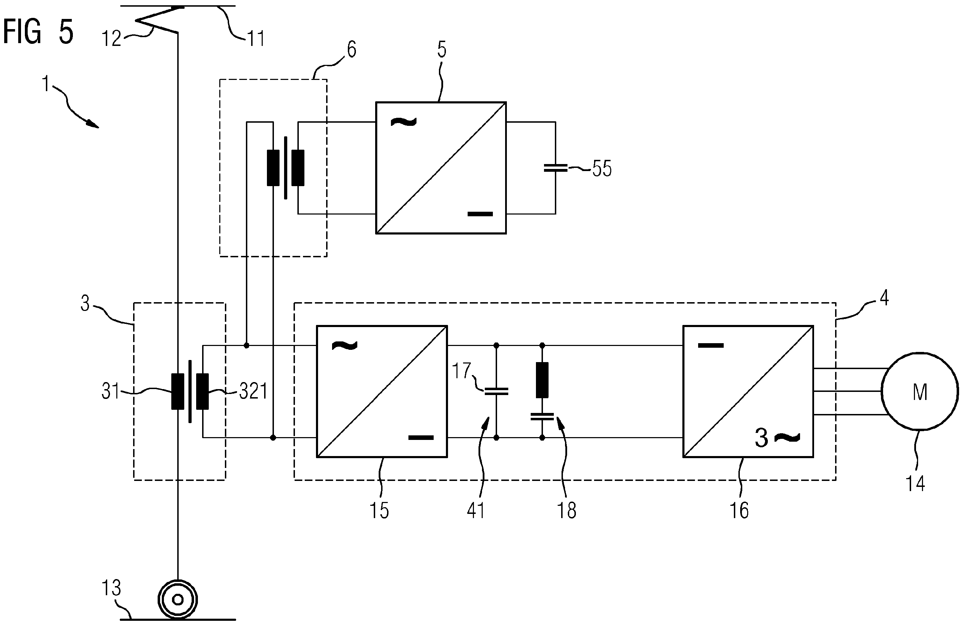

Die FIG 5 zeigt ein weiteres Ausführungsbeispiel eines Antriebssystems 1 mit einem aktiven Filter 5. Dabei ist das aktive Filter über einen Transformator mit der ersten Sekundärwicklung 321 des Haupttransformators 3 verbunden. Zur Vermeidung von Wiederholungen wird auf die Beschreibung zu den Figuren 1 bis 4 sowie auf die dort eingeführten Bezugszeichen verwiesen.

Den Ausführungsbeispielen der Figuren 3 bis 5 ist gemeinsam, dass durch die parallele Anordnung von aktiven Filtern 5 und Traktionsstromrichter 4 nur kleine Störströme kompensiert werden müssen. Da nicht der vollständige Netzstrom des Traktionsstromrichters 4 durch das aktive Filter 5 fließt, kann das aktive Filter 5 auf eine sehr große Schaltfrequenz optimiert werden. Dies erlaubt die Verwendung von niedrig sperrenden Siliziumcarbid-Halbleitern 52. Durch die transformatorische Ankopplung des aktiven Filters 5, sei es über eine zweite Sekundärwicklung 322 des Haupttransformators 3 oder über einen Transformator 6, kann die Zwischenkreisspannung des aktiven Filters 5 derart niedrig gewählt werden, dass niedrigsperrende Siliziumcarbid-Halbleiter 52 zur Anwendung kommen. Dies ist insbesondere dann der Fall, wenn die Zwischenkreise des aktiven Filters 5 und des Traktionsstromrichters 4 nicht miteinander verbunden sind. Für den Fall, dass diese Zwischenkreise miteinander verbunden sind, erlaubt die Ausführung des aktiven Filters 5 als Mehrpunktstromrichter, insbesondere als Dreilevel-Stromrichter, die Verwendung von niedrigsperrenden Halbleitern 52.

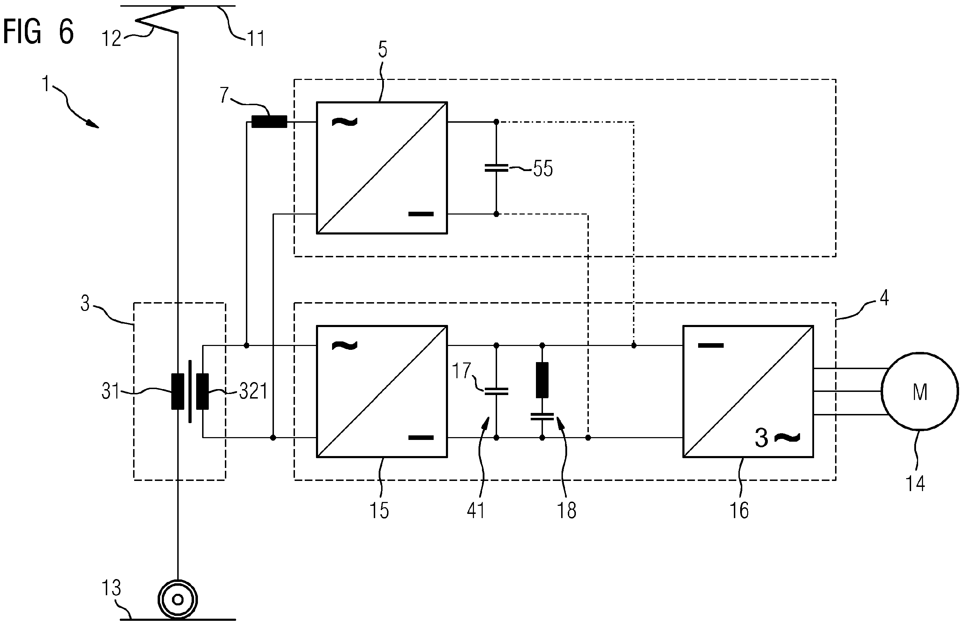

Die FIG 6 zeigt ein weiteres Ausführungsbeispiel eines Antriebssystems 1 mit einem aktiven Filter 5. Das aktive Filter 5 ist in diesem Fall mittels einer Drossel 7 mit der ersten Sekundärwicklung 321 des Haupttransformators 3 verbunden. Damit lässt sich ohne zusätzliche Transformatorwicklung beim Haupttransformator 3 das aktive Filter 5 auch parallel zur sekundärseitigen Netzspannung anschließen. Dabei sind die Zwischenkreise des aktiven Filter 5 und des Traktionsstromrichters 4 nicht notwendigerweise miteinander verbunden. Falls dies jedoch der Fall ist, ist keine zusätzliche Gleichspannungsregelung im aktiven Filter 5 erforderlich. Bei getrennt ausgeführten Zwischenkreisen kann die Zwischenkreisspannung sich von der im Traktionsstromrichter unterscheiden. Es ist jedoch die gleiche Grundschwingungsnetzspannung vom aktiven Filter 5 bereitzustellen, so dass eine Verbindung der Zwischenkreise, insbesondere eine niederinduktive Verbindung, zur Einsparung von Kapazität vorteilhaft ist.

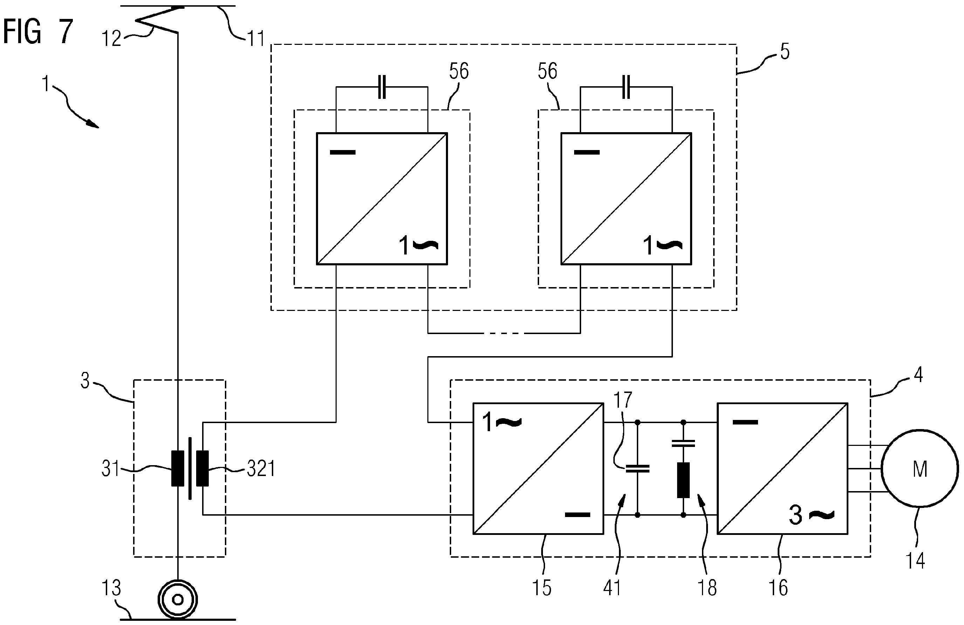

Die FIG 7 zeigt ein weiteres Ausführungsbeispiel für ein Antriebssystem 1 mit einem aktiven Filter 5. In diesem Ausführungsbeispiel weist das aktive Filter 5 mehrere Teilfilter 56 auf, die in einer Reihenschaltung angeordnet sind. Darüber hinaus ist auch das aktive Filter 5 und der Traktionsstromrichter 4 in einer Reihenschaltung angeordnet. Zur Vermeidung von Wiederholungen wird auf die Beschreibung zu den Figuren 1 bis 6 sowie auf die dort eingeführten Bezugszeichen verwiesen. Das aktive Filter kompensiert in diesem Fall die Störspannungs-Harmonischen des Traktionsstromrichters 4 und verhindert damit die Entstehung unerwünschter Störströme.

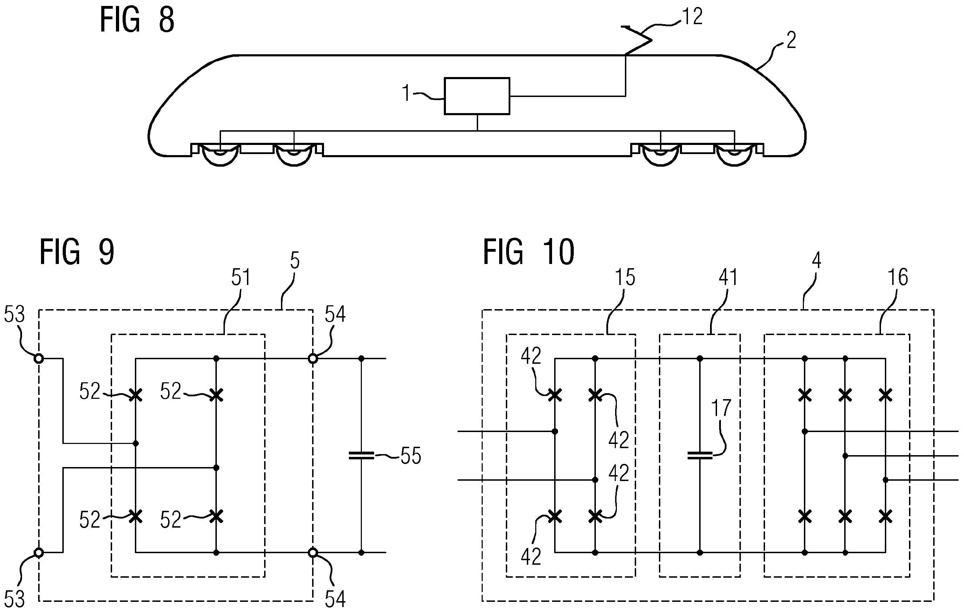

Die FIG 8 zeigt ein Schienenfahrzeug 2 mit einem Antriebssystem 1, das seine benötigte Energie mittels eines Stromabnehmers 12 aus einer hier nicht dargestellten Fahrleitung entnimmt.

Die FIG 9 zeigt den möglichen Aufbau eines aktiven Filters 5. Das aktive Filter 5 weist dabei einen Wechselrichter 51 auf. Bei diesem sind die Halbleiter 52 in einer Vollbrückenschaltung angeordnet. Dabei hat das aktive Filter 5 wechselspannungsseitige Anschlüsse 53 sowie gleichspannungsseitige Anschlüsse 54. Einen gleichspannungsseitigen Anschluss 54 ist ein Kondensator 55 vorhanden. Dieser kann sich entweder außerhalb des aktiven Filters 5 oder alternativ, hier nicht dargestellt, innerhalb des aktiven Filters 5 befinden. Bei den dargestellten Halbleitern 52 handelt es sich vorzugsweise um Halbleiter 52 auf der Basis von Siliziumcarbid. Sie sind ausgeführt als eine Parallelschaltung eines abschaltbaren Halbleiters und einer dazu antiparallel angeordneten Diode. Antiparallel bedeutet in diesem Zusammenhang, dass abschaltbare Halbleiter und Diode jeweils einen Strom in unterschiedlicher Richtung führen können.

Die FIG 10 zeigt ein Ausführungsbeispiel eines Traktionsstromrichters 4. Zur Vermeidung von Wiederholungen wird auf die Beschreibung zur FIG 1 sowie auf die dort eingeführten Bezugszeichen verwiesen. Die weiteren Halbleiter 42 des Vierquadrantenstellers 15 können dabei in vorteilhafter Weise als weitere Halbleiter 42 auf Basis von Siliziumcarbid ausgeführt sein. Durch ihre im Vergleich zu Siliziumhalbleitern vergleichsweise hohe Schaltfrequenz reduzieren sich die durch den Traktionsstromrichter 4 entstehenden Störströme bereits erheblich. Darüber hinaus treten sie aufgrund der hohen Schaltfrequenz bei höheren Frequenzen auf. Auch die weiteren Halbleiter 42 werden aus einer Parallelschaltung eines abschaltbaren Halbleiters und einer dazu antiparallel angeordneten Diode gebildet.

Zusammenfassend betrifft die Erfindung ein Antriebssystem für ein Schienenfahrzeug aufweisend einen Haupttransformator, einen Traktionsstromrichter mit einem Zwischenkreis und ein aktives Filter, wobei der Traktionsstromrichter mit einer ersten Sekundärwicklung des Haupttransformators verbunden ist, wobei das aktive Filter einen Wechselrichter mit Halbleitern auf Basis von Siliziumcarbid aufweist. Ferner betrifft die Erfindung ein Schienenfahrzeug mit einem derartigen Antriebssystem. Weiter betrifft die Erfindung ein Verfahren zum Betreiben eines derartigen Antriebssystems oder eines derartigen Schienenfahrzeugs, wobei der Wechselrichter des aktiven Filters derart angesteuert wird, einen Störstrom durch die Primärwicklung des Haupttransformators zu kompensieren.

## Patentansprüche

1. Antriebssystem (1) für ein Schienenfahrzeug (2) aufweisend
- einen Haupttransformator (3),
- einen Traktionsstromrichter (4) mit einem Zwischenkreis (41)
- ein aktives Filter (5),
wobei der Traktionsstromrichter (4) mit einer ersten Sekundärwicklung (321) des Haupttransformators (3) verbunden ist, wobei das aktive Filter (5) einen Wechselrichter (51) mit Halbleitern (52) auf Basis von Siliziumcarbid aufweist.

2. Antriebssystem (1) nach Anspruch 1, wobei der Traktionsstromrichter (4) weitere Halbleiter (42) auf Basis von Siliziumcarbid aufweist.

3. Antriebssystem (1) nach einem der Ansprüche 1 oder 2, wobei der Haupttransformator (3) eine Kurzschlussspannung von uk<25%, insbesondere uk<15%, aufweist.

4. Antriebssystem (1) nach einem der Ansprüche 1 bis 3, wobei die Halbleiter (52) derart ausgelegt sind, dass im Betrieb die Schaltverluste größer sind als die Durchlassverluste.

5. Antriebssystem (1) nach einem der Ansprüche 1 bis 4, wobei das aktive Filter (5) gleichspannungsseitig parallel zum Zwischenkreis (41) des Traktionsstromrichters (4) angeordnet ist.

6. Antriebssystem (1) nach einem der Ansprüche 1 bis 5, wobei das aktive Filter (5) wechselspannungsseitig mit einer zweiten Sekundärwicklung (322) des Haupttransformators (3) verbunden ist.

7. Antriebssystem (1) nach einem der Ansprüche 1 bis 5, wobei das aktive Filter (5) wechselspannungsseitig parallel zur ersten Sekundärwicklung (321) des Haupttransformators (3) angeordnet ist.

8. Antriebssystem (1) nach Anspruch 7, wobei zwischen aktivem Filter (5) und der ersten Sekundärwicklung (321) des Haupttransformators (3) ein Transformator (6) angeordnet ist.

9. Antriebssystem (1) nach einem der Ansprüche 7 oder 8, wobei zwischen dem aktiven Filter (5) und der ersten Sekundärwicklung (321) des Haupttransformators (3) eine Drossel (7) angeordnet ist.

10. Antriebssystem (1) nach einem der Ansprüche 1 bis 5, wobei das aktive Filter (5) in Reihe zwischen der ersten Sekundärwicklung (321) des Haupttransformators (3) und dem Traktionsstromrichter (4) angeordnet ist.

11. Antriebssystem (1) nach einem der Ansprüche 1 bis 10, wobei die Halbleiter (52) des aktiven Filters (5) in einer Vollbrückenschaltung angeordnet sind.

12. Antriebssystem (1) nach einem der Ansprüche 1 bis 11, wobei der Wechselrichter (51) des aktiven Filters (5) als Mehrpunkt-Wechselrichter, insbesondere als 3-Punkt-Wechselrichter, ausgeführt ist.

13. Schienenfahrzeug (2) mit mindestens einem Antriebssystem (1) nach einem der Ansprüche 1 bis 12.

14. Verfahren zum Betreiben eines Antriebssystems (1) nach einem der Ansprüche 1 bis 12 oder eines Schienenfahrzeugs (2) nach Anspruch 13, wobei der Wechselrichter (51) des aktiven Filters (5) derart angesteuert wird, einen Störstrom (i_{S}) durch die Primärwicklung (31) des Haupttransformators (3) zu kompensieren.

15. Verfahren nach Anspruch 14, wobei der Wechselrichter (51) des aktiven Filters (5) derart angesteuert wird, einen Störstrom (i_{S}) im Frequenzbereich zwischen 2kHz und 18kHz zu kompensieren.

16. Verfahren nach einem der Ansprüche 14 oder 15, wobei die Halbleiter (52) des aktiven Filters (5) mit einer Schaltfrequenz von mindestens 6kHz, insbesondere mit einer Schaltfrequenz von mindestens 18kHz, angesteuert werden.

17. Verfahren nach einem der Ansprüche 14 bis 16, wobei das Antriebssystem (1) einen Traktionsstromrichter (4) mit weitere Halbleitern (42) auf Basis von Siliziumcarbid gemäß Anspruch 2 aufweist, wobei die Halbleiter (52) des aktiven Filters mit einer höheren Schaltfrequenz betrieben werden als die weiteren Halbleiter (42) des Traktionsstromrichters.
